# EUROPEAN PATENT APPLICATION

(11) **EP 4 759 432 A1**
(43) Date of publication of application: **17.06.2026**
(21) Application number: 25217550.0
(22) Date of filing: 21.11.2025
(51) Int. Cl.: B05C 5/02, B05C 9/06, B05C 11/10, H01M 4/04, H01M 4/139

(54) **SLOT DIE COATER**

(30) Priority: 28.11.2024 KR 20240173275
(71) Applicant: SAMSUNG SDI CO., LTD., Yongin-si, Gyeonggi-do 17084 (KR)
(72) Inventor: AN, Eunjin, 17084 Yongin-Si Gyeonggi-do (KR); KIM, Yongsoo, 17084 Yongin-Si Gyeonggi-do (KR); KIM, Sanggi, 17084 Yongin-Si Gyeonggi-do (KR); KIM, Hyunchul, 17084 Yongin-Si Gyeonggi-do (KR); KWAK, Junhyeok, 17084 Yongin-Si Gyeonggi-do (KR); HONG, Chan, 17084 Yongin-Si Gyeonggi-do (KR); KIM, Yongin, 17084 Yongin-Si Gyeonggi-do (KR)
(74) Representative: Michalski Hüttermann & Partner mbB

(57) **Abstract**

A slot die coater includes a slot die including a first slot and a second slot, the first slot being configured to discharge a block coating solution, the second slot being configured to discharge a slurry, and the first slot and the second slot being aligned in an order of a movement direction of a substrate, a first spacer in the first slot, the first spacer including a plurality of first slits spaced apart by a predetermined distance, and a second spacer in the second slot, the second spacer including a second slit positioned to correspond to a space between the plurality of first slits.

## Description

### BACKGROUND

### 1. Field

The present disclosure relates to a slot die coater.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to embodiments of the present disclosure, there is provided a slot die coater including a slot die including a first slot configured to discharge a block coating solution and a second slot configured to discharge a slurry, a first spacer inserted into the first slot, the first spacer including a plurality of first slits spaced apart by a predetermined distance, and a second spacer inserted into the second slot, the second slot including a second slit positioned to correspond to a space between the first slits, wherein the first slot and the second slot are aligned in an order of a movement direction of a substrate.

According to embodiments of the present disclosure, the first spacer may include a first base, a 1_1 guide, a 1_2 guide, and a 1_3 guide extending from the first base to one side, and a 1_1 slit formed between the 1_1 guide and the 1_2 guide and a 1_2 slit formed between the 1_2 guide and the 1_3 guide, wherein the second spacer includes a second base, a 2_1 guide and a 2_2 guide extending from the second base to one side, and the second slit formed between the 2_1 guide and the 2_2 guide.

According to embodiments of the present disclosure, the 2_1 guide and the 2_2 guide may include a first area adjacent to the second base with a constant width, and a second area connected to the first area with a greater width than the first area.

According to embodiments of the present disclosure, the second area may include an inclined part with a width that increases along a direction where the slurry is discharged.

According to embodiments of the present disclosure, the inclined part may be inclined at an inclination angle of 0° to 9° in the direction where the slurry is discharged.

According to embodiments of the present disclosure, both end portions of the second slit may be placed to be spaced apart by a predetermined distance outwardly from an inner end portion of the 1_1 slit and an inner end portion of the 1_2 slit.

According to embodiments of the present disclosure, the predetermined distance may range from 0 mm to 0.5 mm.

According to embodiments of the present disclosure, a material of the substrate may include copper (Cu).

According to embodiments of the present disclosure, a material of the block coating solution may include sodium carboxymethyl cellulose (CMC).

According to embodiments of the present disclosure, a material of the slurry may include an active material, a binder, and a conductive material.

According to embodiments of the present disclosure, a material of the active material may include a negative electrode active material.

According to embodiments of the present disclosure, a viscosity of the block coating solution may be equal to or greater than a viscosity of the slurry.

According to embodiments of the present disclosure, a viscosity of the block coating solution may be 80% to 120% of a viscosity of the slurry.

According to embodiments of the present disclosure, there is provided an electrode plate including a substrate, blocking films spaced apart by a predetermined distance on a surface of the substrate and arranged parallel to each other, and a composite layer disposed to cover a surface of a portion between the blocking films and at least part of the surfaces of the blocking films of the surface of the substrate.

According to embodiments of the present disclosure, a material of the substrate may include copper (Cu).

According to embodiments of the present disclosure, a material of the blocking film may include sodium carboxymethyl cellulose (CMC).

According to embodiments of the present disclosure, a material of the composite layer may include an active material, a binder, and a conductive material.

According to embodiments of the present disclosure, a material of the active material may include a negative electrode active material.

According to embodiments of the present disclosure, the blocking films may include an overlapping part on which the composite layer is disposed on the surfaces of the blocking films, wherein a width of the overlapping part is 20% to 50% of a width of the blocking films.

According to embodiments of the present disclosure, a maximum thickness of the blocking film may be 0% to 20% of a maximum thickness of the composite layer.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the following drawings:
FIG. 1 is a side cross-sectional view illustrating an example of a slot die coater according to embodiments of the present disclosure;
FIG. 2 is a perspective view illustrating an example of a slot die coater according to embodiments of the present disclosure;
FIG. 3 is an exploded perspective view illustrating an example of a slot die coater according to embodiments of the present disclosure;
FIG. 4 is a plan view illustrating an example of a first spacer according to embodiments of the present disclosure;
FIG. 5 is a plan view illustrating an example of a second spacer according to embodiments of the present disclosure;
FIG. 6 is an enlarged view illustrating area A of FIG. 5;
FIG. 7 is an enlarged view illustrating area B of FIG. 6;
FIG. 8 is a graph illustrating an example of a thickness of an electrode plate according to an inclination angle of an inclination part;
FIG. 9 is a front view illustrating an example of a first slot and a second slot of a slot die coater according to embodiments of the present disclosure;
FIG. 10 is a plan view illustrating an example of an electrode plate according to embodiments of the present disclosure;
FIG. 11 is a cross-sectional view illustrating an example of an electrode plate before drying according to embodiments of the present disclosure; and
FIG. 12 is a cross-sectional view illustrating an example of an electrode plate after drying according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements throughout. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any subrange subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

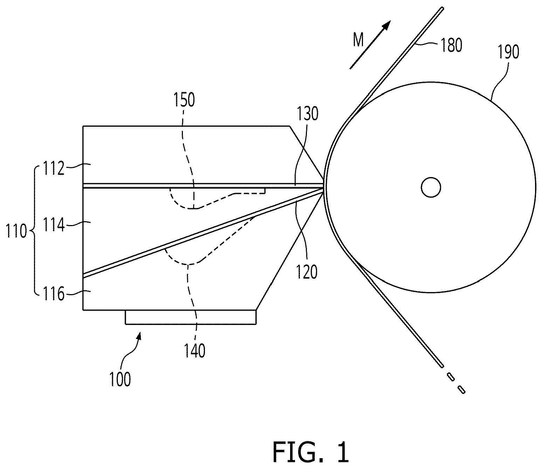

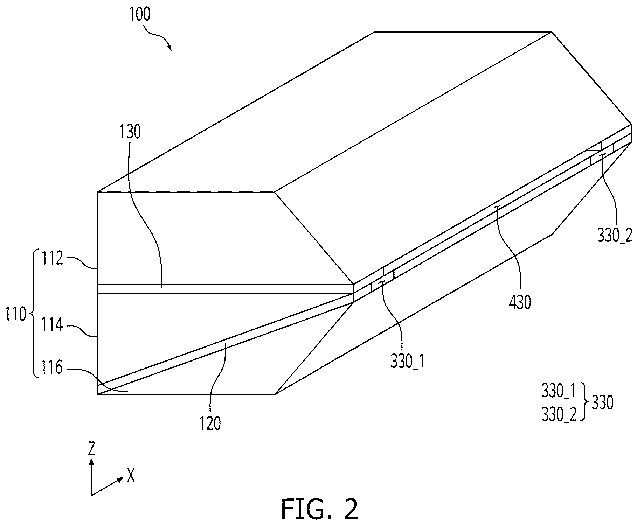

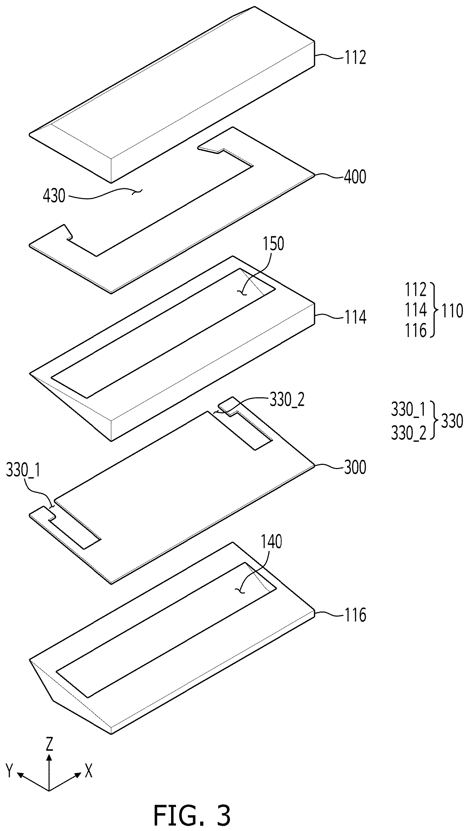

FIG. 1 is a side cross-sectional view illustrating an example of a slot die coater according to embodiments of the present disclosure, FIG. 2 is a perspective view illustrating an example of a slot die coater, and FIG. 3 is an exploded perspective view illustrating an example of a slot die coater.

Referring to FIG. 1 to FIG. 3, a slot die coater 100 may include a slot die 110 in which a first slot 120 and a second slot 130 are formed, a first spacer 300 inserted into the first slot 120, and a second spacer 400 inserted into the second slot 130. The slot die 110 may include a block coating solution accommodation unit 140 and a slurry accommodation unit 150. The first slot 120 and the second slot 130 may be aligned in the order of a movement direction M of a substrate 180. For example, referring to FIGS. 1 and 2, the first slot 120 and the second slot 130 may be aligned along the Z-axis direction to be stacked on top of each other (e.g., so an outlet of the second slot 130 may be above and vertically overlap an outlet of the first slot 120 in the Z-axis direction), such that the substrate 180 may sequentially face the first slot 120 and the second slot 130 while moving in the M direction.

The slot die 110 may include an upper die block 112, a middle die block 114 and a lower die block 116. The slot die 110 may include the first slot 120 interposed between the middle die block 114 and the lower die block 116. The slot die 110 may include the second slot 130 interposed between the upper die block 112 and the middle die block 114.

The first slot 120 may be formed between the middle die block 114 and the lower die block 116 where both blocks face each other. The first slot 120 with the first spacer 300 may function as a passage through which a block coating solution flows. The gap of the first slot 120 may be determined based on the thickness of the first spacer 300. The thickness of the first spacer 300 may be set according to the required thickness of a coating layer.

The second slot 130 may be formed between the upper die block 112 and the middle die block 114 where both blocks face each other. The second slot 130 with the second spacer 400 may function as a passage through which a slurry flows. The gap of the second slot 130 may be determined based on the thickness of the second spacer 400. The thickness of the second spacer 400 may be set according to the required thickness of a coating layer.

For example, as illustrated in FIG. 1, the block coating solution accommodation unit 140 may be formed in the lower die block 116 to have a predetermined depth, and may be connected to (e.g., in fluid communication with) the first slot 120. The block coating solution accommodation unit 140 may be connected to a coating solution supply chamber equipped outside through a supply line. Therefore, when a block coating solution is completely filled in the block coating solution accommodation unit 140, the block coating solution may flow through the first slot 120 to be discharged to the outside through a first slit 330. In another example, the block coating solution accommodation unit 140 may be formed in the middle die block 114.

For example, as illustrated in FIG. 1, the slurry accommodation unit 150 may be formed in the middle die block 114 to have a predetermined depth, and may be connected to (e.g., in fluid communication with) the second slot 130. The slurry accommodation unit 150 may be connected to a slurry supply chamber equipped outside through a supply line. Therefore, when a block coating solution is completely filled in the slurry accommodation unit 150, the slurry may flow through the second slot 130 to be discharged to the outside through a second slit 430. In another example, the slurry accommodation unit 150 may be formed in the upper die block 112.

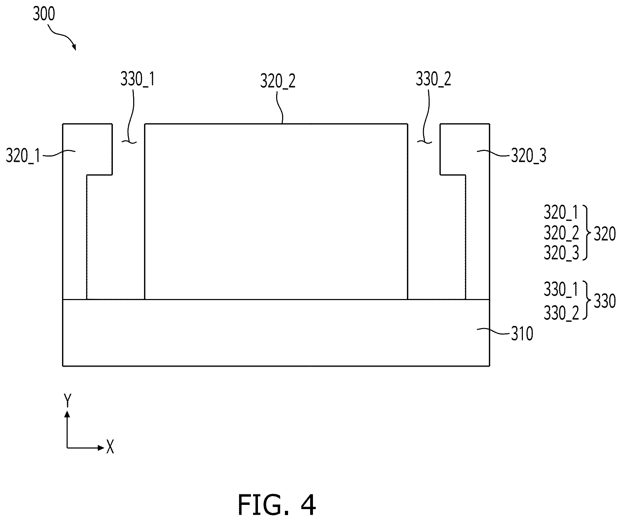

The first spacer 300 may include the first slit 330 formed to be spaced apart by a predetermined distance (e.g., the first slit 330 may include two first sub-slits spaced apart from each other by a predetermined distance in the X-axis direction). The first spacer 300 may include a plurality of first sub-slits by intermittently cutting one area. The first spacer 300 may be disposed on the remaining portion excluding one side of the edge area of the surface where the middle die block 114 and the lower die block 116 face each other. Accordingly, the block coating solution may be discharged to the outside through the first slit 330, e.g., through the plurality of first sub-slits. The first spacer 300 with the first slit 330 will be described in more detail below with reference to FIG. 4.

The first spacer 300 may include a sealing material for a gasket function. For example, the first spacer 300 may include plastic or metal, e.g., the first spacer 300 may include one of polytetrafluoroethylene (e.g., Teflon), polyester, copper, or aluminum. The first spacer 300 may be coupled to the middle die block 114 or the lower die block 116 via screws. Therefore, the block coating solution may be prevented from leaking from areas other than where the first slit 330 is formed between the middle die block 114 and the lower die block 116. However, the material and coupling method of the first spacer 300 may vary.

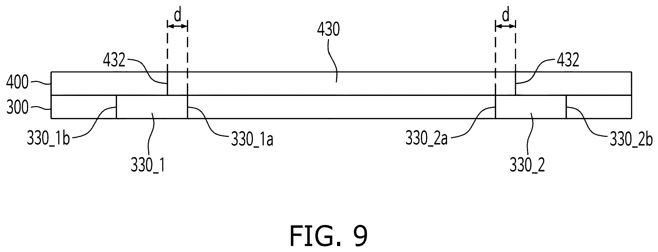

The second spacer 400 may include the second slit 430 formed to correspond to (e.g., overlap) the predetermined distance (e.g., a space) between the first sub-slits of the first slit 330. As shown in FIG. 2, the second spacer 400 may include at least one second slit 430 corresponding to the space between the first sub-slits of the first slit 330. The second spacer 400 may be disposed on areas excluding one side of the edge area of the surface where the upper die block 112 and the middle die block 114 face each other. Accordingly, the slurry may be discharged through at least one second slit 430. The second spacer 400 with the second slit 430 will be described in more detail below with reference to FIG. 9.

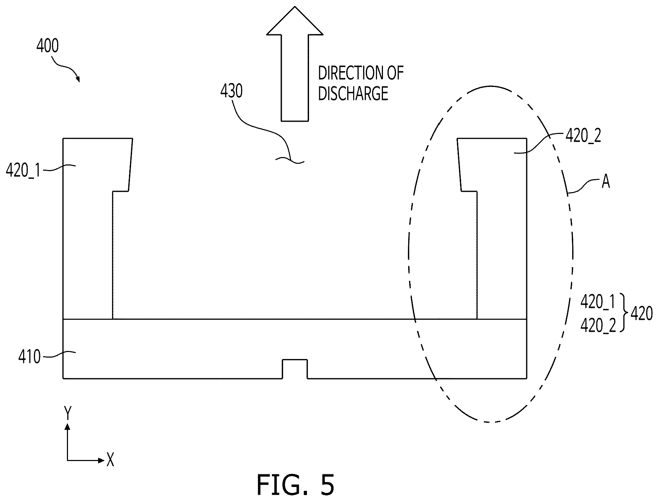

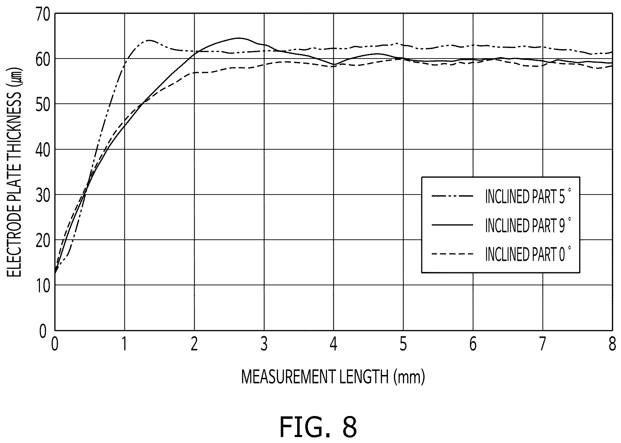

The second spacer 400 may include a second base and a second guide. The second guide may be adjacent to the second base and may include a first area with a constant width and a second area connected to the first area with a greater width than the first area. The second area may have an inclined part with a width that increases in a direction where the slurry is discharged. The description thereof will be detailed with reference to FIG. 5. to FIG. 8.

The second spacer 400 may include a sealing material for a gasket function. For example, the second spacer 400 may include plastic or metal, e.g., the second spacer 400 may include one of polytetrafluoroethylene (e.g., Teflon), polyester, copper, or aluminum. The second spacer 400 may be coupled to the upper die block 112 or the middle die block 114 through screws. The slurry may be prevented from leaking from an area excluding where the second slit 430 is formed between the upper die block 112 and the middle die block 114. However, the material and coupling method of the second spacer 400 may vary.

As shown in FIG. 1, the slot die coater 100 may be placed in front of a rotatably driven roller 190. When the roller 190 is rotated, the substrate 180 may be driven in an M direction. For example, the block coating solution and the slurry may be discharged, so that the block coating solution and the slurry may be continuously coated on the surface of the substrate 180. In another example, the block coating solution and the slurry may be discontinuously coated on the surface of the substrate 180.

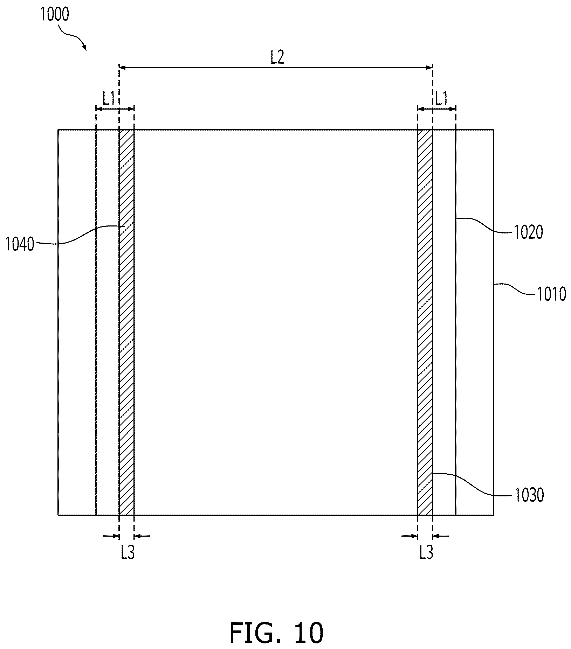

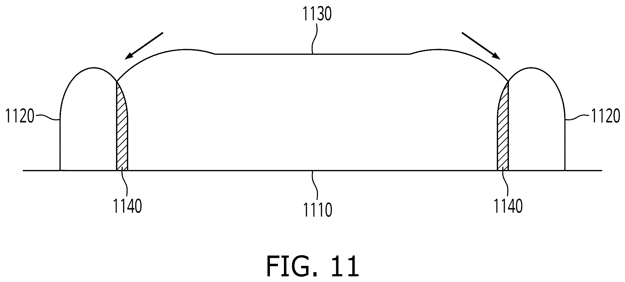

The first slot 120 and the second slot 130 may be aligned in a direction where the substrate 180 moves (e.g., in the M direction). Accordingly, an electrode plate coated by the slot die coater 100 may include a composite layer 1130 (refer to FIG. 11) placed to cover the surface of a portion between blocking films 1120 (refer to FIG. 11) and at least part of the blocking films 1120 of the surface of the substrate 1110 (refer to FIG. 11). The description thereof will be detailed with reference to FIG. 10 to FIG. 12.

For example, the substrate 180 may function as a negative electrode. For example, the material of the substrate 180 may include copper (Cu). The substrate 180 may be formed of, e.g., copper foil, nickel foil, stainless steel foil, titanium foil, nickel foam, copper foam, polymer substrate coated with a conductive metal, or a combinations thereof. In another example, the material of the substrate 180 may include aluminum (Al).

The material of the block coating solution may include sodium carboxymethyl cellulose (CMC). The flow of the end portion of the slurry may be blocked without affecting the function of the electrode plate.

The material of the slurry may include an active material, a binder, and a conductive material. The polarity of the electrode plate may be set according to the type of the slurry. The material of the active material may include any one of a positive electrode active material and a negative electrode active material. The electrode plate coated by the slot die coater 100 may be set as a positive electrode for a lithium secondary battery or a negative electrode for a lithium secondary battery.

The viscosity of the block coating solution may be similar to the viscosity of the slurry. The viscosity of the block coating solution may be equal to or greater than the viscosity of the slurry, and the viscosity of the block coating solution may be 80% to 120% of the viscosity of the slurry. Accordingly, the block coating solution and the slurry may be combined by a surface tension, thereby preventing the collapse of the end portion of the slurry in advance.

FIG. 4 is a plan view illustrating an example of the first spacer 300 according to embodiments of the present disclosure.

Referring to FIG. 4, the first spacer 300 may include a first base 310 and at least three (3) first guides 320 extending from the first base 310. The first base 310 and the first guides 320 may be integrally formed (e.g., of a same material as a monolithic and seamless unit).

According to embodiments, the first spacer 300 may include the first base 310, a first sub-guide 320_1, a second sub-guide 320_2, and a third sub-guide 320_3 extending from the first base 310 to a same side (e.g., the three first guides 320 may include the first sub-guide 320_1, the second sub-guide 320_2, and the third sub-guide 320_3). Accordingly, the first spacer 300 may. Accordingly, the first spacer 300 may include a first sub-slit 330_1 formed between the first sub-guide 320_1 and the second sub-guide 320_2, and a second sub-slit 330_2 formed between the second sub-guide 320_2 and the third sub-guide 320_3. However, the number of sub-guides of the first guide 320 may vary.

Each of the first sub-guide 320_1 and the third sub-guide 320_3 may include a region adjacent to the first base 310 with a constant width. In detail, with respect to the X-axis direction, each of the first sub-guide 320_1 and the third sub-guide 320_3 may include a region with a constant length.

The end of each of the first sub-guide 320_1 and the third sub-guide 320_3 in the Y-axis direction may have a greater width (e.g., as measured in the X-axis direction) than the region adjacent to the first base 310. The widths of the first sub-slit 330_1 and the second sub-slit 330_2 (e.g., in the X-axis direction) may be set according to the width of the end of each of the first sub-guide 320_1 and the third sub-guide 320_3.

The width of the first sub-slit 330_1 and the width of the second sub-slit 330_2 may be the same. Specifically, with respect to the X-axis direction, the length of the first sub-slit 330_1 and the length of the second sub-slit 330_2 may be equal to each other (e.g., the first sub-slit 330_1 and the second sub-slit 330_2 may be mirror images of each other with respect to a center axis of the first spacer 300 in the Y-axis direction). Accordingly, the block coating solution may be discharged with the same width, thereby uniformly blocking the flow of both ends of the slurry discharged from the second slit 430 (refer to FIG. 5).

According to embodiments, the second sub-guide 320_2 may have a constant width (e.g., in the X-axis direction). The width of the second sub-guide 320_2 may be greater than each of the width of the first sub-guide 320_1 and the width of the third sub-guide 320_3. In detail, with respect to the X-axis direction, the length of the second sub-guide 320_2 may be greater than each of the length of the first sub-guide 320_1 and the length of the third sub-guide 320_3. Depending on the width of the second sub-guide 320_2, a gap (e.g., the predetermined distance) between the first sub-slit 330_1 and the second sub-slit 330_2 may be set. Accordingly, it is possible to respond to various widths of the slurry discharged from the second slit 430 (refer to FIG. 5).

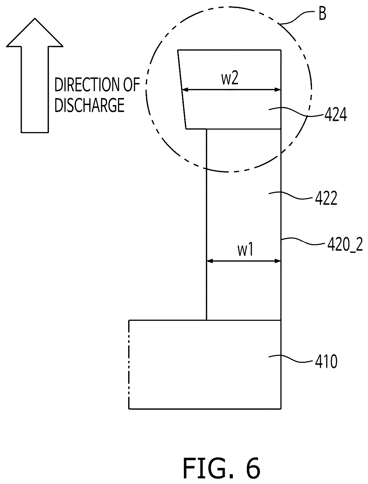

FIG. 5 is a plan view illustrating an example of the second spacer 400 according to embodiments of the present disclosure, and FIG. 6 is an enlarged view illustrating area A of FIG. 5.

Referring to FIG. 5 and FIG. 6, the second spacer 400 may include a second base 410 and at least two (2) second guides 420 extending from the second base 410, e.g., the second guide 420 may include a first sub-guide 420_1 and a second sub-guide 420_2. The second base 410 and the second guides 420 may be integrally formed. For example, the second sub-guide 420_2 guide 420_2 may include a first area 422 and a second area 424. The first area 422 and the second area 424 may be placed at the edge of the second base 410. For convenience of explanation, the following description focuses on the second sub-guide 420_2, but the first sub-guide 420_1 may be described in the same manner.

The second spacer 400 may include the second base 410, the first sub-guide 420_1 and the second sub-guide 420_2 extending from the second base 410 to a same side, and a second slit 430 formed between the first sub-guide 420_1 and the second sub-guide 420_2. The first sub-guide 420_1 and the second sub-guide 420_2 may extend from both edges (e.g., opposite edges) of the second base 410. The direction in which the first sub-guide 420_1 and the second sub-guide 420_2 extend may be the same as the direction in which the slurry is discharged (e.g., in the Y-axis direction). However, the position and number of second guides 420 may vary.

The first area 422 may be adjacent to the second base 410 with a constant width w1 (e.g., in the X-axis direction). The outer edge of the first area 422 may be placed in alignment (e.g., coplanar or level) with the outer edge of the second base 410. The outer edge may be a side oriented away (e.g., facing away) from the second slit 430 along the width direction of the second spacer 400 (e.g., in the X-axis direction).

The second area 424 may be connected to the first area 422 with a width w2 greater than the width w1 of the first area 422. The outer edge of the second area 424 may be placed in alignment (e.g., coplanar or level) with the outer edge of the first area 422 and the outer edge of the second base 410. Therefore, the second area 424 may be formed with the width w2 that increases in an inward direction (e.g., the second area 424 may have the width w2 that increases in a direction oriented toward the second slit 430 to extend beyond the width w1 in the X-axis direction). Therefore, the flow rate of both ends of the block coating solution discharged from the second slit 430 (refer to FIG. 5) may be increased.

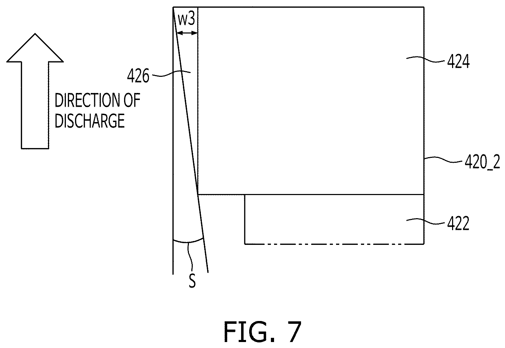

FIG. 7 is an enlarged view illustrating area B of FIG. 6, and FIG. 8 is a graph illustrating an example of a thickness of an electrode plate according to an inclination angle of an inclined part. The description of the components shown in FIG. 7, which are explained in FIGS. 5 and 6, will be omitted.

Referring to FIG. 7, the second area 424 may include an inclined part 426 with a width w3 that gradually increases in the direction where the slurry is discharged (e.g., in the Y-axis direction). In detail, the width w3 of the inclined part 426 may have a shape inclined to gradually increase. Therefore, the inclined part 426 may have an inclination angle S with respect to the direction where the slurry is discharged (e.g., along a longitudinal direction of the second guide 420 in the Y-axis direction).

FIG. 8 illustrates data from experimental results that measure the thickness of an electrode plate coated by the slot die coater 100 (FIG. 1). The horizontal axis of the data from experimental results indicates the width of the electrode plate, and the vertical axis indicates the thickness of the electrode plate. The coating by the slot die coater 100 may involve a process where the block coating solution is discharged from the first slit 330 (FIG. 2), followed by the discharged of the slurry from the second slit 430 (FIG. 2) to perform the coating.

The measured length of 0 mm to 4 mm, which is the horizontal axis of the data of the experimental results, indicates both end portions of the electrode plate. Both end portions of the electrode plate may be the same as both end portions of the coated slurry. The thickness of the electrode plate of around 60 µm, which is the vertical axis of the data of the experimental results indicates the average thickness of the electrode plate.

As shown in FIG. 8, when an inclination angle S of the inclined part 426 is 0°, the thickness of both end portions of the coated slurry, between approximately 0 mm and 2 mm along the horizontal axis, may be smaller than the average thickness of approximately 60 µm. A sliding phenomenon may occur where the thickness of the coated slurry gradually decreases toward both ends. Therefore, loading unevenness of the electrode plate may occur, and a N/P ratio, which is the facing ratio between the negative electrode active material layer and the positive electrode active material layer, may be equal to or smaller than 1 (one), thereby causing short circuit due to lithium precipitation.

When the inclination angle S of the inclined part 426 is 9°, the thickness of both end portions of the coated slurry, between approximately 0 mm and 2 mm along the horizontal axis, may be smaller than the average thickness of approximately 60 µm. The flow rate of both ends of the coated slurry may increase, but the sliding phenomenon may occur in which the thickness of the coated slurry gradually decreases toward the both ends.

When the inclination angle S of the inclined part 426 is 5°, the thickness of both end portions of the coated slurry, between approximately 0 mm and 1 mm along the horizontal axis, may be smaller than the average thickness of approximately 60 µm. As a result, the sliding phenomenon may be suppressed, thereby reducing the loading unevenness of the electrode plate.

When the inclination angle S of the inclined part 426 is 5°, the sliding phenomenon may be reduced compared to when the inclination angle S of the inclined part 426 is 0° or 9°. This may be because the flow rate of the slurry is discharged such that the flow at both ends of the slurry may be appropriately blocked by the block coating solution when the inclination angle S of the inclined part 426 is between 0° and 9°. According to embodiments, the inclined part 426 may be inclined at an inclination angle S of 0° to 9° with respect to the direction in which the slurry is discharged (Y-axis direction). This may reduce the loading unevenness of the electrode plates, thereby preventing the risk of short circuit due to lithium precipitation in advance.

FIG. 9 is a plan view illustrating an example of a first slit and a second slit of a slot die coater according to embodiments of the present disclosure.

Referring to FIG. 9, the first spacer 300 may include the first sub-slit 330_1 and the second sub-slit 330_2, and the second spacer 400 may include the second slit 430.

According to embodiments, both end portions 432 of the second slit 430 may be placed to be spaced apart inwardly from an outer end portion 330_1b of the first sub-slit 330_1 and an outer end portion 330_2b of the second sub-slit 330_2. In detail, both end portions 432 of the second slit 430 may be placed to be spaced along the X-axis direction from the outer end portion 330_1b of the first sub-slit 330_1 and the outer end portion 330_2b of the second sub-slit 330_2.

According to embodiments, both end portions 432 of the second slit 430 may be placed to be outwardly spaced apart by a predetermined distance (d) from an inner end portion 330_1a of the first sub-slit 330_1 and an inner end portion 330_2a of the second sub-slit 330_2. In detail, both end portions 432 of the second slit 430 may be placed to be spaced apart by a predetermined distance (d) from the inner end portion 330_1a of the first sub-slit 330_1 and the inner end portion 330_2a of the second sub-slit 330_2.

According to embodiments, the predetermined distance (d) may range from 0 mm to 0.5 mm. Accordingly, the block coating solution discharged from the first sub-slit 330_1 and the second sub-slit 330_2 and the slurry discharged from the second slit 430 may overlap each other. As a result, the flow at both end portions of the slurry may be blocked by the block coating solution, which may reduce the sliding phenomenon.

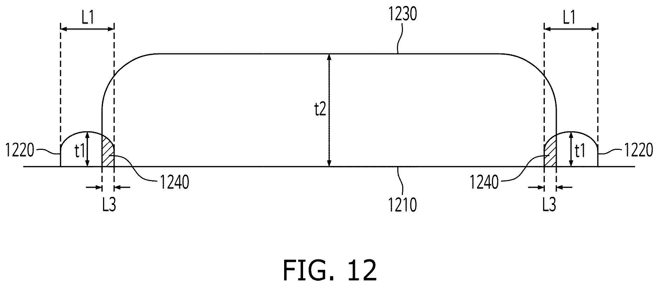

FIG. 10 is a plan view illustrating an example of an electrode plate according to embodiments, FIG. 11 is a cross-sectional view illustrating an example of an electrode plate before drying, and FIG. 12 is a cross-sectional view illustrating an example of an electrode plate after drying.

Referring to FIG. 10, an electrode plate 1000 may include a substrate 1010, a blocking film 1020, and a composite layer 1030. The blocking film 1020 may include an overlapping part 1040 in which the composite layer 1030 is placed on the surface of the blocking film 1020.

According to embodiments, the material of the substrate 1010 may include copper (Cu). According to embodiments, the material of the blocking film 1020 may include sodium carboxymethyl cellulose (CMC). Therefore, the flow of the end portion of the slurry may be blocked without affecting the function of the electrode plate.

The material of the composite layer 1030 may include an active material, a binder, and a conductive material. The polarity of the electrode plate may be set according to the type of the composite layer. The material of the active material may include any one of a positive electrode active material or a negative electrode active material. Accordingly, the electrode plate 1000 may be set as a positive electrode for a lithium secondary battery or a negative electrode for a lithium secondary battery.

A positive electrode for a rechargeable lithium battery may include a current collector and a positive electrode active material layer on the current collector. The positive electrode active material layer may include a positive electrode active material and may further include a binder and/or a conductive material(e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. LiaA1-bXbO2-cDc (0.90≤a≤1.8, 0≤b≤0.5, and 0≤c≤0.05); LiaMn2-bXbO4-cDc (0.90≤a≤1.8, 0≤b≤0.5, and 0≤c≤0.05); LiaNi1-b-cCobXcO2-αDα (0.90≤a≤1.8, 0≤b≤0.5, 0≤c≤0.5, and 0<α<2); LiaNi1-b-cMnbXcO2-αDα (0.90≤a≤1.8, 0≤b≤0.5, 0≤c≤0.5, and 0<α<2); LiaNibCocL1dGeO2 (0.90≤a≤1.8, 0≤b≤0.9, 0≤c≤0.5, 0≤d≤0.5, and 0≤e≤0.1); LiaNiGbO2 (0.90≤a≤1.8 and 0.001≤b≤0.1); LiaCoGbO2 (0.90≤a≤1.8 and 0.001≤b≤0.1); LiaMn1-bGbO2 (0.90≤a≤1.8 and 0.001≤b≤0.1); LiaMn2GbO4 (0.90≤a≤1.8 and 0.001≤b≤0.1); LiaMn1-gGgPO4 (0.90≤a≤1.8 and 0≤g≤0.5); Li(3-f)Fe2(PO4)3 (0≤f≤2); or LiaFePO4 (0.90≤a≤1.8).

In the above Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L1 is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

Al may be used as the current collector, but is not limited thereto.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The negative current collector may include a copper foil, a nickel foil, a stainless steel foil, a titanium foil, a nickel foam, a copper foam, a polymer substrate coated with a conductive metal, or a combination thereof.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO2, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoridehexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Referring back to FIG. 10, a width L1 of the blocking film 1220 and a width L3 of the overlapping part 1240 may be set to appropriately prevent the flow of both end portions of the composite layer 1230. According to embodiments, the width L3 of the overlapping part 1240 may be 20% to 50% of the width L1 of the blocking film 1220. Accordingly, the sliding phenomenon of both end portions of the composite layer 1230 may be suppressed.

In the electrode process during the secondary battery manufacturing process, a slurry including an active material may be coated on a substrate and then dried to manufacture a positive electrode or a negative electrode of a secondary battery. The slurry coated on the substrate may be dried while passing through a dry part when a solvent that constitutes part of the slurry evaporates. As a result, as shown in FIG. 11 and FIG. 12, a thickness t2 of the composite layer 1230 and a thickness t1 of the blocking film 1220 after drying may be reduced. The maximum thickness t1 of the blocking film 1220 may be 0% to 20% of the maximum thickness t2 of the composite layer 1230. Accordingly, the residual amount of the blocking film 1220 after the electrode plate drying process may be small. Therefore, the performance of the electrode may not be affected by the blocking film even without removing the blocking film 1220.

After drying the electrode plate, the electrode plate 1000 may further include an insulating layer. The insulating layer may be coated and placed to cover at least part of the surface of the blocking film 1220. For example, the insulating layer may be placed to cover the entire surface of the blocking film 1220. The insulating layer may be placed to cover at least part of the surface of the substrate 1210 and at least part of the surface of the blocking film 1220. Accordingly, the insulating layer may cover at least a part of the side surface of the blocking film 1220.

The insulating layer may be placed to cover at least a part of the surface of the substrate 1210. For example, the insulating layer may be placed to contact the side surface of the blocking film 1220 and cover at least a part of the surface of the substrate 1210.

According to embodiments, the material of the insulating layer may include either polyimide (PI) or ceramic. Polyimide (PI) may be a material based on a polymer material, and ceramic may be a material based on a non-metallic material with a high chemical stability to protect the surface of the substrate 1210 and prevent short circuits due to excellent electrical insulation. However, the material of the insulating layer may vary.

By way of summation and review, an electrode plate of a secondary battery may be manufactured by coating an electrode active material slurry on a surface of a substrate by a slot die coater. A sliding phenomenon in which the thickness of a composite layer becomes smaller may occur at both end portions of the coated electrode plate. Accordingly, both end portions of the electrode plate experience loading unevenness, which may cause deterioration of safety and performance of secondary batteries. In contrast, the present disclosure provides a slot die coater that enhances the safety of the coated electrode plate.

According to embodiments of the present disclosure, there is a provided a slot die coater that reduces the deviation of loading of the electrode plate by increasing the flow rate of the slurry coated on both end portions of the electrode plate.

According to embodiments of the present disclosure, a sliding phenomenon is suppressed by blocking the flow of both ends portions of the slurry by a block coating solution disposed on the both end portions of the slurry, thereby preventing the danger of short circuit due to lithium precipitation and improve the safety of the secondary battery.

According to embodiments of the present disclosure, the degree to which the flow of the slurry is blocked by the block coating solution is determined in relation to the flow rate of the slurry. Adjusting the inclination angle of the inclined part of the spacer to discharge the slurry at a proper flow rate suppresses the sliding phenomenon, thereby improving the safety of the secondary battery.

However, aspects and features of the present disclosure are not limited to those described above, and other aspects and features not mentioned will be clearly understood by a person skilled in the art from the detailed description, described above.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A slot die coater (100) for coating a substrate (1010), the slot die coater (100) comprising,
a slot die (110) including a first slot (120) and a second slot (130), the first slot (120) being configured to discharge a block coating solution, the second slot (130) being configured to discharge a slurry, and the first slot (120) and the second slot (130) being aligned in an order of a movement direction of the substrate (1010);
a first spacer (300) in the first slot (120) for forming a passage through which the block coating solution can flow, the first spacer (300) including a plurality of first slits (330) for discharging the block coating solution, the plurality of first slits (330) spaced apart from each other by a predetermined distance; and
a second spacer (400) in the second slot (130) for forming a passage through which the slurry can flow, the second spacer (400) including a second slit (430) for discharging the slurry, the second slit (430) positioned to correspond to a space between the plurality of first slits (330).

2. The slot die coater (100) as claimed in claim 1, wherein:
the first spacer (300) includes a first base (310), a first sub-guide (320_1), a second sub-guide (320_2), and a third sub-guide (320_3) extending from the first base (310) to one side (E), a first sub-slit (330_1) between the first sub-guide (320_1) and the second sub-guide (320_2), and a second sub-slit (330_2) between the second sub-guide (320_2) and the third sub-guide, the plurality of first slits (330) including the first sub-slit (330_1) and the second sub-slit (330_2), and
the second spacer (400) includes a second base (410), a first sub-guide (420_1) and a second sub-guide (420_2) extending from the second base (410) to one side, and the second slit (430) between the first sub-guide (420_1) and the second sub-guide (420_2).

3. The slot die coater (100) as claimed in claim 2, wherein each of the first sub-guide (420_1) of the second spacer (400) and the second sub-guide (420_2) of the second spacer (400) includes:
a first area (422) adjacent to the second base (410) with a constant width (w1); and
a second area (424) connected to the first area (422) with a greater width (w2) than the first area.

4. The slot die coater (100) as claimed in claim 3, wherein the second area (424) includes an inclined part (426) with a width (w3) that increases along a longitudinal direction of a corresponding one of the first sub-guide (420_1) of the second spacer (400) and the second sub-guide (420_2) of the second spacer (400).

5. The slot die coater (100) as claimed in any of claims 2 to 4, wherein opposite end portions (432) of the second slit (430) are spaced apart by a predetermined distance (d) outwardly from an inner end portion (330_1a) of the first sub-slit (330_1) and an inner end portion (330_2a) of the second sub-slit (330_2).

6. The slot die coater (100) as claimed in any of claims 1 to 5, the slot die (110) further comprises a slurry accommodation unit (150) being filled with the slurry, and wherein a material of the slurry includes an active material, a binder, and a conductive material.

7. The slot die coater (100) as claimed in claim 6, wherein a material of the active material includes a negative electrode active material.

8. The slot die coater (100) as claimed in any of claims 1 to 7, the slot die (110) further comprises a slurry accommodation unit (150) being filled with the slurry and a block coating solution accommodation unit (140) being filled with the block coating solution, wherein a viscosity of the block coating solution is equal to or greater than a viscosity of the slurry.

9. An electrode plate (100), comprising:
a substrate (1010);
blocking films (1020) spaced apart by a predetermined distance on a surface of the substrate (1010), the blocking films (1020) being arranged parallel to each other; and
a composite layer (1030) covering a surface of a portion between the blocking films (1020) and at least part of surfaces of the blocking films (1020) of the surface of the substrate, and wherein the electrode plate (100) is preferably produced by coating the substrate (1010) with a slot die coater (100) being configured according to any of the previous claims.

10. The electrode plate as claimed in claim 9, wherein a material of the substrate includes copper (Cu).

11. The electrode plate as claimed in claims 9 or 10, wherein a material of the blocking film includes sodium carboxymethyl cellulose (CMC).

12. The electrode plate as claimed in any of claims 9 to 11, wherein a material of the composite layer (1030) includes an active material, a binder, and a conductive material.

13. The electrode plate as claimed in claim 12, wherein a material of the active material includes a negative electrode active material.

14. The electrode plate as claimed in any of claims 9 to 13, wherein the blocking films (1020) include an overlapping part, the composite layer (1030) being on the blocking films (1020), and a width of the overlapping part being 20% to 50% of a width of the blocking films (1020).

15. The electrode plate as claimed in any of claims 9 to 14, wherein a maximum thickness of each of the blocking films (1020) is 0% to 20% of a maximum thickness of the composite layer (1030).
